# EUROPÄISCHE PATENTSCHRIFT

(11) **EP 1 250 527 B1**
(45) Veröffentlichungstag und Bekanntmachung des Hinweises auf die Patenterteilung: **07.02.2007**
(21) Anmeldenummer: 00983269.2
(22) Anmeldetag: 09.12.2000
(51) Int. Cl.: F02M 25/12

(54) **ANSAUGSYSTEM FÜR EINE BRENNKRAFTMASCHINE MIT EINER VORNEHMLICH FÜR SAUERSTOFFMOLEKÜLE DURCHLÄSSIGEN MEMBRAN**
INTAKE SYSTEM FOR AN INTERNAL COMBUSTION ENGINE WITH A MEMBRANE THAT IS MAINLY PERMEABLE TO OXYGEN MOLECULES
SYSTEME D'ADMISSION POUR MOTEUR A COMBUSTION INTERNE, DOTE D'UNE MEMBRANE PERMEABLE PRINCIPALEMENT AUX MOLECULES D'OXYGENE

(30) Priorität: 27.01.2000 DE 10003525
(43) Veröffentlichungstag der Anmeldung: 23.10.2002
(73) Patentinhaber: Mann + Hummel GmbH, 71638 Ludwigsburg (DE)
(72) Erfinder: WEBER, Olaf, 71292 Friolzheim (DE)
(74) Vertreter: Voth, Gerhard
(86) Internationale Anmeldenummer: PCT/EP2000/012461
(87) Internationale Veröffentlichungsnummer: WO 2001/055580

(56) Entgegenhaltungen:
- DE-A- 19 710 840
- GB-A- 2 339 240
- PATENT ABSTRACTS OF JAPAN vol. 009, no. 128 (M-384), 4. Juni 1985 (1985-06-04) & JP 60 011667 A (NIPPON JIDOSHA BUHIN SOGO KENKYUSHO KK), 21. Januar 1985 (1985-01-21)
- PATENT ABSTRACTS OF JAPAN vol. 009, no. 231 (M-414), 18. September 1985 (1985-09-18) & JP 60 088858 A (TOYOTA JIDOSHA KK), 18. Mai 1985 (1985-05-18)
- PATENT ABSTRACTS OF JAPAN vol. 009, no. 242 (M-417), 28. September 1985 (1985-09-28) & JP 60 095150 A (MITSUBISHI DENKI KK), 28. Mai 1985 (1985-05-28)
- PATENT ABSTRACTS OF JAPAN vol. 009, no. 235 (M-415), 21. September 1985 (1985-09-21) & JP 60 090975 A (ISUZU JIDOSHA KK), 22. Mai 1985 (1985-05-22)

## Beschreibung

Die Erfindung betrifft ein Ansaugsystem für eine Brennkraftmaschine, welches zur Luftfilterung ein herkömmliches Luftfilter sowie eine vornehmlich für Sauerstoffmoleküle durchlässige Membran aufweist, nach der Gattung des Patentanspruches 1 (siehe hierzu JP-A-60088858).

Die Verwendung von Membranen zur Sauerstoffanreicherung der Verbrennungsluft ist bekannt. Die Handelsbezeichnungen für bekannte Materialien zur Sauerstoffanreicherung der Luft sind beispielsweise Silikon und Polysulfon. Gemäß der DE 197 10 840 A1 wird ein solches System vorgeschlagen. Gemäß der einzigen Figur in diesem Dokument besteht dieses System aus einem Ansaugtrakt, in dem ein Luftfilter 22 untergebracht ist. Zusätzlich gibt es ein weiteres Gehäuse, welches mit einer vornehmlich für Sauerstoffmoleküle durchgängigen Membran versehen ist. Dieses Gehäuse ist ebenfalls mit dem Ansaugtrakt verbunden, so dass eine Parallelschaltung des dargestellten Luftfilters 22 und der Membran 32 zustande kommt. Abhängig von der Stellung von Drosselklappen 24, 34 kann die Verbrennungsluft mit Sauerstoff angereichert werden.

Durch eine derartige Sauerstoffanreicherung der dem Motor zugeführten Ansaugluft wird zum einen die Abgastemperatur erhöht und hiermit die Katalysator-Anspringzeit, das heißt die Zeit, die vergeht, bis der Katalysator seine Betriebstemperatur erreicht und somit seine volle Wirkung entfaltet, verkürzt. Außerdem lässt sich die Kraftstoffumsetzung im Motor verbessern. Hierdurch kann die Emission von Kohlenmonoxyd und Kohlenwasserstoffen im Abgas verringert werden. Darüber hinaus wird auch der Stickstoffgehalt der Verbrennung reduziert, wodurch weniger Stickoxyde entstehen. Insgesamt lässt sich also eine Verringerung der Umweltbelastung durch die Abgase der Brennkraftmaschine erreichen.

Durch die Verwendung der Membrantechnologie zur Sauerstoffanreicherung der Verbrennungsluft entsteht jedoch ein zusätzlicher Komponentenaufwand für das Ansaugsystem. Hierdurch entsteht im übrigen ein zusätzlicher Bedarf an Bauraum im Fahrzeug. Der Bauraum ist in modernen Kraftfahrzeugen jedoch begrenzt, außerdem besteht gleichzeitig ein großes Interesse an wirtschaftlichen Lösungen.

Aufgabe der Erfindung ist es daher, ein Ansaugsystem für eine Brennkraftmaschine zu schaffen, welches ein Luftfilter und eine vornehmlich für Sauerstoffmoleküle durchlässige Membran aufweist und dabei kostengünstig in der Herstellung und wirtschaftlich im Betrieb ist. Diese Aufgabe wird durch die Merkmale des Patentanspruchs 1 gelöst.

### Vorteile der Erfindung

Das erfindungsgemäße Ansaugsystem besteht aus einem Ansaugkanal, in dem zumindest ein Luftfilter sowie die bevorzugt für Sauerstoffmoteküle durchlässige Membran untergebracht sind. Unter dem Ansaugkanal ist im weiteren Sinne eine Struktur zu verstehen, die den Ansaugweg von einer Ansaugöffnung hin zu mindestens einem Zylindereinlass der Brennkraftmaschine bildet. In diesem Ansaugweg sind weitere Komponenten untergebracht, die für die Funktion der Brennkraftmaschine unerlässlich sind. Teil des Ansaugkanals ist z. B. eine Drosselklappe und ein Saugrohr, welches aus einem Sammelraum und pro Zylinder mindestens einem Saugkanal besteht.

Erfindungsgemäß ist die Membran in das Luftfiltergehäuse eingebaut. Durch die Integration wird gleichzeitig Bauraum sowie Gewicht an den Bauteilen des Ansaugsystems eingespart. Gleichzeitig kann durch eine entsprechende Gestaltung Fertigungsaufwand eingespart werden, so dass die vorgeschlagene Lösung wirtschaftlicher wird.

Gemäß einer weiteren Ausgestaltung der Erfindung wird die Membran bezüglich des Luftstroms der Ansaugluft parallel zum Filtereinsatz angeordnet. Diese Variante ist besonders einfach zu realisieren, wenn die Membran im Luftfiltergehäuse untergebracht ist. Durch die parallele Durchströmung ist ein Mindestdurchsatz an Verbrennungsluft durch den Filtereinsatz immer gegeben.

Eine vorteilhafte Ausführung ergibt sich, wenn die Membran als Teil der Wandung des Gehäuses des Luftfilters ausgebildet wird. Hierdurch ergibt sich eine besonders platzsparende Variante, da die Flächen des Luftfiltergehäuses sowieso zur Verfügung stehen. Diese können dann zu einer Anreicherung der Verbrennungsluft an Sauerstoff benutzt werden. Aufgrund des Druckabfalls über den verwendeten Membranen ist nämlich eine große Fläche der Membran notwendig, um die Luft möglichst stark mit Sauerstoff anreichern zu können.

Es ist vorteilhaft, die Membran, die einen Teil der Wandung des Luftfiltergehäuses bildet, mit einer Abschirmung zu versehen. Diese Abschirmung schützt die Membran vor Verschmutzung, z. B. vor im Motorraum befindlichem Spritzwasser. Eine Verschmutzung der Membran würde deren Funktion beeinträchtigen und somit zu einer Verringerung der Abscheideleistung führen. Die Abschirmung kann z. B. aus einer Abdeckung bestehen, die aus optischen Gründen oder aus Gründen einer Geräuschdämmung im Motorraum untergebracht ist. Diese Abdeckungen werden vermehrt direkt am Luftfiltergehäuse befestigt, so dass ihre abschirmende Wirkung gleichzeitig zum Schutz der Membran herangezogen werden kann.

Eine alternative Maßnahme zur Verringerung der Betriebskosten der Brennkraftmaschine bzw. zur Verbesserung der Funktion des Ansaugsystems besteht darin, dass die Membran in Stromrichtung der Ansaugluft gesehen hinter dem Luftfilter angeordnet ist. Damit wird die Membran ausschließlich durch die von dem Filtereinsatz gereinigte Reinluft beaufschlagt, womit eine Verschmutzung der Membran weitgehend vermieden werden kann. Ein Auswechseln der Membran ist somit nicht erforderlich. Für den Einbau der Membran muss im Ansaugsystem reinluftseitig ein Einbauraum vorgesehen werden. Dieser kann insbesondere auch im Luftfiltergehäuse liegen.

Hierdurch werden gleichzeitig die schon beschriebenen Vorteile der Bauraumausnutzung erreicht.

Gemäß einer Weiterführung des Integrationsgedankens ist in das Gehäuse für den Filtereinsatz gleichzeitig das Saugrohr für die Brennkraftmaschine integriert. Hierdurch ergibt sich eine besonders kompakte Bauweise, wobei vorteilhaft die Trennwand zwischen den Gehäuseteilen des Luftfilters und des Saugrohres für die Unterbringung der Membran genutzt werden kann. Hierdurch lässt sich ohne eine Vergrö-ßerung des Bauraums eine größere Fläche zur Unterbringung der Membranen nutzen.

Die Membran muss nicht als Folie aufgebaut sein. Als Folie lässt sie sich zwar besonders einfach in Wandteile des Filtergehäuses integrieren. Eine Maßnahme zur Vergrößerung der effektiven Membranfläche stellt jedoch die Verwendung von Hohlfasermembranen dar. Diese können z. B. mit ihren Enden in einen Wandteil des Gehäuses eingegossen werden, so dass sich ebenfalls eine platzsparende Geometrie ergibt.

Es ist vorteilhaft, ein Drosselorgan parallel zur Membran im Ansaugkanal anzuordnen. Diese Funktion kann z. B. durch die Drosselklappe übernommen werden, die sowieso im Ansaugtrakt vorgesehen ist. Ist diese Drosselklappe parallel zur Membran angeordnet, so kann der Ansaugluftstrom nur bis zu dem Grad gedrosselt wer den, dass der durch das Filterelement geleitete Hauptstrom der Ansaugluft vollständig abgestellt wird. Der Nebenstrom, der durch die Membran gesogen wird, steht im Ansaugtrakt immer zur Verfügung. Damit muss die durch die Membran angesaugte Luft geringer oder gleich der im Leerlauf benötigten Luftmenge sein. Auf diese Weise wird immer die möglichst größte Menge an Sauerstoff angereicherter Luft zur Verfügung gestellt.

Allerdings lässt sich auch ein Drosselorgan im Nebenstrom des Ansaugkanals anordnen, welches in Serie zur Membran geschaltet ist. In Verbindung mit der Drosselklappe im Ansaugkanal kann die Luftzufuhr zur Brennkraftmaschine damit vollständig abgeriegelt werden. Ausserdem lässt sich dadurch die durch die Membran angesaugte Luftmenge regulieren, wodurch auch der Grad der Sauerstoffanreicherung der Verbrennungsluft beeinflusst werden kann. Bei dieser Ausgestaltung der Ansaugsystems lassen sich auch Membranen verwenden, die eine höhere Luftkapazität durchlassen, als im Leerlauf benötigt. Um eine Steuerung des Sauerstoffgehaltes zu ermöglichen, können im Ansaugkanal Sensormittel vorgesehen werden, die neben der durchgeleiteten Luftmenge auch deren Sauerstoffgehalt feststellen. Mit Hilfe dieser Messwerte lässt sich die der Brennkraftmaschine zugeführte Sauerstoffmenge bestimmen und durch entsprechende Stellungen der Drosselorgane beeinflussen.

Diese und weitere Merkmale von bevorzugten Weiterbildungen der Erfindung gehen ausser aus den Ansprüchen auch aus der Beschreibung und den Zeichnungen hervor, wobei die einzelnen Merkmale jeweils für sich allein oder zu mehreren in Form von Unterkombinationen bei der Ausführungsform der Erfindung verwirklicht sein können.

### Zeichnung

Weitere Einzelheiten der Erfindung sind in der Zeichnung anhand von schematischen Ausführungsbeispielen beschrieben. Hierbei zeigen
- Figur 1: die schematische Anordnung eines Luftfiltergehäuses mit Membran im Motorraum eines Fahrzeuges im Schnitt und
- Figur 2: den schematischen Schnitt durch ein Gehäuse, in das ein Saugrohr, ein Luftfilter und eine Membran integriert ist.

### Beschreibung der Ausfühtungsbeispiele

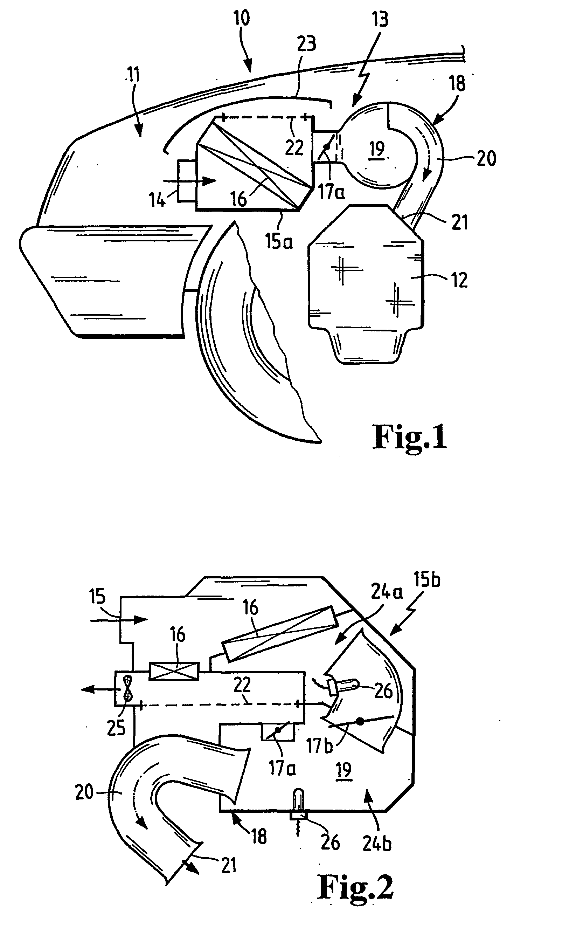

In Figur 1 ist ein Vorderwagen 10 eines Kraftfahrzeuges mit einem Motorraum 11 dargestellt. Im Motorraum befindet sich eine Brennkraftmaschine 12, die aus einem Ansaugkanal 13, bestehend aus einer Ansaugöffnung 14 in einem Gehäuse 15a besteht, mit einem Filtereinsatz 16, einem Drosselorgan 17a und einem Saugrohr 18.

Das Saugrohr weist einen Sammelraum 19 und Saugkanäle 20 auf, von denen einer dargestellt ist. Die Saugkanäle enden in Zylindereinlässen 21 an der Brennkraftmaschine.

Ein Teil der reinseitigen Wandung des Gehäuses 15a ist als Membran 22 ausgeführt. Hierdurch ergibt sich eine Parallelschaltung der Membran zum Filtereinsatz 16. Der Ansaugluftstrom kann durch das Drosselorgan 17a als Ganzes geregelt werden.

Zum Schutz der Membran ist ausserhalb des Gehäuses 15a eine Abschirmung 23 angebracht. Diese kann z. B. aus einer Haube zur Verbesserung der Motoroptik und zur Geräuschabschirmung bestehen. Die Abschirmung schützt gleichzeitig die Membran 22 vor Verschmutzung. Die Anordnung der Membran 22 liegt zudem in einem Bereich des Motorraums direkt unter der Motorhaube, wo die Wahrscheinlichkeit einer Verschmutzung der Membran geringer ausfällt als in tiefer gelegenen Bereichen der Brennkraftmaschine.

In Figur 2 ist der schematische Schnitt durch ein Gehäuse 15b dargestellt. Dieses enthält die Ansaugöffnung 15, Filtereinsätze 16, den Sammelraum 19 und Saugkanäle 20, die in Zylindereinlässen 21 enden. Als Trennebene zwischen einem Gehäuseteil 24a für die Filtereinsätze 16 und einem Gehäuseteil 24b, welcher das Saugrohr 18 bildet, ist die Membran 22 angeordnet. Parallel zur Membran 22 ist ein Drosselorgan 17b vorgesehen, welches den Hauptluftstrom zur Brennkraftmaschine regelt. Weiterhin kann in Serie zur Membran 22 ein Drosselorgan 17a geschaltet sein, welches zur Beeinflussung der Luftmenge durch die Membran verwendet werden kann. Auf dieses Drosselorgan kann jedoch auch verzichtet werden, wenn der durch die Membran 22 geleitete und mit Sauerstoff angereicherte Luftstrom geringer ist als die in der Leerlaufphase der Brennkraftmaschine benötigte Ansaugluft.

Die Membran 22 ist in einem eigenen Volumen angeordnet, so dass die mit Stickstoff angereicherte Luft vor der Membran 22 nicht durch das Drosselorgan 17b in den Sammelraum 19 gelangen kann. Um den Wirkungsgrad der Membran 22 zu steigern, kann zudem ein Gebläse 25 vorgesehen werden, welches die mit Stickstoff angereicherte Luft von der Membran entfernt.

Sensoren 26 können vorgesehen werden, um einerseits die Strömungsgeschwindigkeit der Ansaugluft und andererseits deren Sauerstoffgehalt festzustellen. Durch Auswertung der Messergebnisse lässt sich dann die Sauerstoffmenge ermitteln, mit der die Brennkraftmaschine versorgt wird. Zur Beeinflussung der Sauerstoffmenge und der Luftmenge lassen sich die Drosselorgane 17a und 17b im Zusammenspiel steuern.

## Patentansprüche

1. Ansaugsystem für eine Brennkraftmaschine, enthaltend zumindest einen Ansaugkanal (13), der eine Ansaugöffnung (14) mit mindestens einem Zylindereinlass (21) der Brennkraftmaschine verbindet, einen in einem Gehäuse (15a, b) untergebrachten Filtereinsatz (16), wobei das Gehäuse derart im Ansaugkanal (13) untergebracht ist, dass der Filtereinsatz von der Ansaugluft durchströmbar ist, eine vornehmlich für Sauerstoffmoleküle durchlässige Membran (22), wobei diese derart im Ansaugkanal (13) untergebracht ist, dass sie von der Ansaugluft durchströmbar ist, wobei die Membran (22) in das Gehäuse (15a, b) des Luftfilters integriert ist, und wobei die Membran (22) einen Teil der Wandung des Gehäuses (15a, b) des Luftfilters bildet, **dadurch gekennzeichnet, dass** das Gehäuse (15a, b) des Filtereinsatzes im Bereich der Membran eine Abschirmung (23) gegen im Motorraum auftretenden Schmutz aufweist und die Abschirmung (23) durch eine Abdeckung zur Verbesserung der Optik im Motorraum gebildet ist.

2. Ansaugsystem nach Anspruch 1, **dadurch gekennzeichnet, dass** die Membran (22) bezüglich des Luftstromes der Ansaugluft parallel zum Filtereinsatz (16) angeordnet ist.

3. Ansaugsystem nach Anspruch 1, **dadurch gekennzeichnet, dass** die Membran (22) in Stromrichtung der Ansaugluft gesehen hinter dem Filtereinsatz (16) angeordnet ist.

4. Ansaugsystem nach einem der vorangehenden Ansprüche, **dadurch gekennzeichnet, dass** in das Gehäuse (15a, b) ein Saugrohr (18) integriert ist, welches einen Teil des Ansaugkanals (13) bildet.

5. Ansaugsystem nach Anspruch 4, **dadurch gekennzeichnet, dass** die Membran (22) als Trennwand zwischen einem Gehäuseteil (24a) des Luftfilters und einem Gehäuseteil (24b) des Saugrohres ausgeführt ist.

6. Ansaugsystem nach einem der vorherigen Ansprüche, **dadurch gekennzeichnet, dass** die Membran (22) parallel zu einem Drosselorgan (17a, b) angeordnet ist, welches zur Steuerung des Volumenstromes der Ansaugluft vorgesehen ist.

7. Ansaugsystem nach einem der vorherigen Ansprüche, **dadurch gekennzeichnet, dass** die Membran (22) vor oder hinter einem Drosselorgan (17a, b) angeordnet ist.

8. Ansaugsystem nach einem der vorangehenden Ansprüche, **dadurch gekennzeichnet, dass** ein Gebläse (25) vorgesehen ist, welches die mit Stickstoff angereicherte Luft von der Membran (22) entfernt.

## Claims

1. Intake system for an internal combustion engine, the said intake system including at least one intake duct (13), which connects an intake opening (14) to at least one cylinder inlet (21) of the internal combustion engine, a filter insert (16) that is accommodated in a housing (15a, b), wherein the housing is accommodated in the intake duct (13) in such a manner that the filter insert is traversable by the intake air, a diaphragm (22) that is permeable first and foremost to oxygen molecules, wherein the said diaphragm is accommodated in the intake duct (13) in such a manner that it is traversable by the intake air, wherein the diaphragm (22) is incorporated into the housing (15a, b) of the air filter, and wherein the diaphragm (22) forms a portion of the wall of the housing (15a, b) of the air filter, **characterised in that**, in the region of the diaphragm, the housing (15a, b) of the filter insert includes a screen (23) protecting it against any dirt occurring in the engine compartment and the screen (23) is formed by a cover to improve the visual appearance in the engine compartment.

2. Intake system according to claim 1, **characterised in that** the diaphragm (22) is disposed parallel to the filter insert (16) with reference to the air flow of the intake air.

3. Intake system according to claim 1, **characterised in that** the diaphragm (22) is disposed downstream of the filter insert (16) when viewed in the direction of flow of the intake air.

4. Intake system according to one of the preceding claims, **characterised in that** an intake tube (18) is incorporated into the housing (15a, b), the said intake tube forming a portion of the intake duct (13).

5. Intake system according to claim 4, **characterised in that** the diaphragm (22) is in the form of a partition wall between a housing part (24a) of the air filter and a housing part (24b) of the intake tube.

6. Intake system according to one of the preceding claims, **characterised in that** the diaphragm (22) is disposed parallel to a throttle member (17a, b), which is provided to control the volume flow of the intake air.

7. Intake system according to one of the preceding claims, **characterised in that** the diaphragm (22) is disposed in front of or behind a throttle member (17a, b).

8. Intake system according to one of the preceding claims, **characterised in that** a fan (25) is provided, which removes the nitrogen-enriched air from the diaphragm (2).

## Revendications

1. Système d'admission pour moteur à combustion interne comprenant au moins un canal d'admission (13) reliant un orifice d'admission (14) à au moins une admission de cylindre (21) du moteur, une cartouche filtrante (16) dans un boîtier (15a, b) placé dans le canal d'admission (13) de manière à ce que la cartouche filtrante puisse être traversée par l'air d'admission, une membrane (22) perméable principalement aux molécules d'oxygène, placée dans le canal d'admission (13) de manière à être traversée par l'air d'admission, la membrane (22) intégrée dans le boîtier (15a, b) du filtre à air formant une partie de la paroi du boîtier (15a, b) du filtre à air,
**caractérisé en ce que**
le boîtier (15a, b) de la cartouche filtrante présente dans la zone de la membrane un écran (23) contre les saletés apparaissant dans le compartiment du moteur et l'écran (23) est formé par un revêtement pour améliorer l'esthétique du le compartiment du moteur.

2. Système d'admission selon la revendication 1,
**caractérisé en ce que**
la membrane (22) est parallèle à la cartouche filtrante (16) par rapport à l'écoulement de l'air d'admission.

3. Système d'admission selon la revendication 1,
**caractérisé en ce que**
la membrane (22) est derrière la cartouche filtrante (16) dans le sens d'écoulement de l'air d'admission.

4. Système d'admission selon l'une quelconque des revendications précédentes,
**caractérisé en ce qu'**
un collecteur d'admission (18) faisant partie du canal d'admission (13) est intégré dans le boîtier (15a, b).

5. Système d'admission selon la revendication 4,
**caractérisé en ce que**
la membrane (22) forme une paroi de séparation entre une partie de boîtier (24a) du filtre à air et une partie de boîtier (24b) du collecteur d'admission.

6. Système d'admission selon l'une des revendications précédentes,
**caractérisé en ce que**
la membrane (22) est parallèle à un organe d'étranglement (17a, b) prévu pour la commande du courant volumique de l'air d'admission.

7. Système d'admission selon l'une des revendications précédentes,
**caractérisé en ce que**
la membrane (22) est devant ou derrière un organe d'étranglement (17a, b).

8. Système d'admission selon l'une des revendications précédentes,
**caractérisé en ce qu'**
un ventilateur (25) éloigne de la membrane (22) l'air enrichi en azote.
